# EUROPEAN PATENT APPLICATION

(11) **EP 1 647 328 A1**
(43) Date of publication of application: **19.04.2006**
(21) Application number: 04256380.9
(22) Date of filing: 15.10.2004
(51) Int. Cl.: B01J 19/24, C02F 1/00

(54) **Device containing metallic plates**

(71) Applicant: Lan, Yao-Ling, Taiwan (ROC) (CH)
(72) Inventor: Lan, Yao-Ling, Taiwan (ROC) (CH)
(74) Representative: Stuttard, Garry Philip

(57) **Abstract**

A steady state energy of matter device including a fixed space (eg a chamber), at least one reaction unit assembled in the fixed space and a time control unit for controlling the reaction time of the reaction unit. Each reaction unit includes at least two mesh plates and metal plates spaced apart from the mesh plates for providing particles of non-visible radiation capable of interference, superposition, reflection and dispersion. The matter to be processed is put into the fixed space and is processed for a preset time causing air particles moving to and fro to impact in the chamber to generate circumambulation thereby obtaining a frequency of the energy of non-visible radiation. This impacts out electrons, decomposes bond junctions in large molecules into elements and small molecules whereafter the decomposed elements and small molecules are relinked and rearranged to a steady state.

## Description

### BACKGROUND OF THE INVENTION

### 1. FIELD OF THE INVENTION

The present invention relates to a steady device of matter energy, and particularly to a steady device of matter energy, which adjusts energy activation of matter through reflection and rearranges molecule structure of the matter to a balanceable steady state thereby increasing matter energy to strengthening weak characteristics of the matter to be steady

### 2. PRIOR ART

In accordance with the modem science, the elementary particle of matter is an atom which includes an atomic nucleus and peripheral electrons. The atomic nucleus includes protons and neutrons. In ultra microcosmic, the electrons, the protons and the neutrons exist in a manner of photoelectric magnetism or wave and provide matter energy. In accordance with the Conservation of Energy, matter energy, which disappears at a part, occurs at another part thereby achieving a balance state. For example, when a magnet attracts an iron bolt, it requires a force to detach the bolt from the magnet. The force may be provided through using body energy. So the used body energy is confronted or exchanged with the energy of the magnet attracting the bolt. Further for example, heat energy of steam is converted to mechanical energy (engine), and potential energy of a falling water flow is converted to kinetic energy (waterpower generator) and so on.

Furthermore, it is full of visible light such as sunlight and invisible light such as X ray, Gamma ray, infrared ray, ultraviolet radiation, TV wave, radio wave and so on in nature. Both of the visible and invisible light exist in a manner of wave or electromagnetic wave, which presents in different ways in accordance with wavelength thereof. In accordance with Torsion Field of Theory, a nature phenomena exists in a manner of whirlpool structure which transmits signals in a speed of decuple velocity of light such as gyration of electrons of an atom, rotation of the earth, circumrotation of Milky Way galaxy and so on. The whirlpool rotation structure is a characteristic of the nature. Therefore, it is a task to cause and use high vibration waves of elementary particles of the matter in accordance with the characteristic of the nature and the conservation of energy law.

### SUMMARY OF THE INVENTION

Accordingly, an object of the present invention is to provide a steady device of matter energy which increases matter energy and strengthens weak characteristics of the matter to a vantage point thereby keeping the matter energy at a high point, whereby the steady device of matter energy can be applied to drinking water, cosmetic, wine, tea, planting, animal breeding, T cell cultivation of stem cell, medical treatment and so on for keeping matter energy of the processed matter at a high point and accelerating occurrence of a good effect.

To achieve the above-mentioned object, a steady device of matter energy in accordance with the present invention includes a fixed space, at least one reaction unit assembled in the fixed space, and a time control unit. Each reaction unit includes at least two mesh plates and metal plates keeping proper space from the mesh plates for providing particles of invisible light to cause interference, superposition, reflection and dispersion. The time control unit is for controlling reaction time of the reaction unit. Therefore matter ready to be processed is put into the fixed space and is processed for preset time controlled by the time control unit for causing come-and-go impact of air particles of the fixed space to generate circumambulating thereby obtaining frequency energy of invisible light to impact out electrons. Bond junctions of large molecules are decomposed into elements and small molecules and then the decomposed elements and small molecules are re-linked and rearranged to a balance state for increasing matter energy characteristics to a high point.

Wherein the mesh plate is black, and the metal plate is argent and has an rough surface.

Wherein the reaction unit is formed in a column shape or in any regular or irregular geometric shape.

Other objects, advantages and novel features of the present invention will be drawn from the following detailed embodiment of the present invention with attached drawings, in which:

### BRIEF DESCRIPTION OF THE DRAWINGS

Fig. 1 is an exploded view of a reaction unit of a steady device of matter energy of the present invention;

Fig. 2 is a perspective view showing the reaction unit being assembled in a fixed space;

Fig. 3 is a schematic view showing light extending through slits of the reaction unit and causing interference and superposition;

Fig. 4 is a schematic view showing light emitting to plane surfaces and rough metal surfaces;

Figs. 5 and 6 are schematic views showing the reaction unit of the steady device of matter energy causing repeated impact of particles in the fixed space to cause circumambulating;

Figs. 7A and 7B are schematic views showing photoemission of electron deviation;

Fig. 8(a-j) is a schematic view showing elements of compound being re-linked and rearranged; and

Figs. 9A-9E are schematic views showing continuous processing through different geometric shapes of reaction units, different fixed spaces and different processing time.

### DESCRIPTION OF THE PREFERRED EMBODIMENT

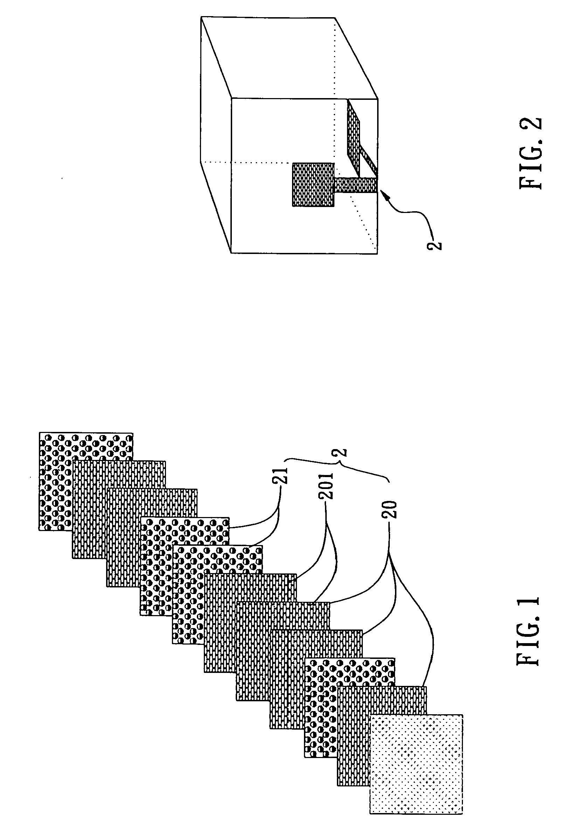

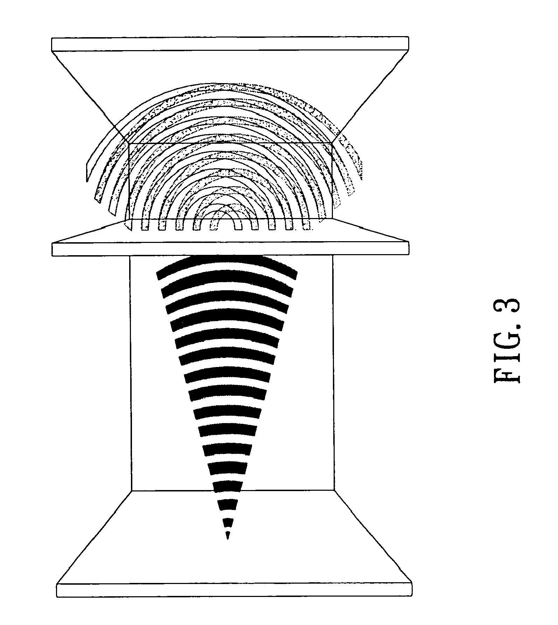

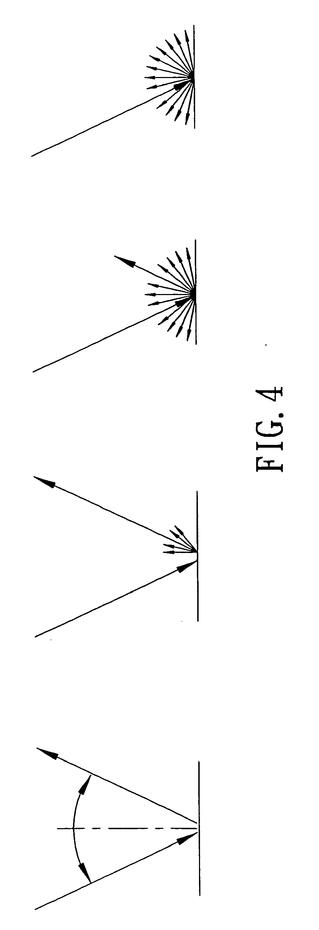

Referring to Figs. 1-2, a steady device of matter energy 1 of the present invention includes a plurality of reaction units 2. As shown in Fig. 1, each reaction unit 2 includes a plurality of mesh plates 20 and metal plates 21 keeping proper space from the mesh plates 20. Each mesh plate 20 is preferred to be black for facilitating to absorb particles in the air or nature. The metal plate 21 is preferred to be argent for facilitating to provide high reflection interface thereby resulting in radiation and reflection. Referring to Fig. 1, the mesh plates 20 and the metal plates 21 are square and are configured in different quantity scales. In practice, each mesh plate 20 and each metal plate 21 may be formed in a column shape or in any regular or irregular geometric shape. A plurality of meshes 201 is defined in each mesh plate 20. The meshes 201 are isometrically arranged to be a plurality of rows which are offset to each other thereby providing particles of air to cause interference and superposition effects, as shown in Fig. 3. The metal plate 21 has an rough surface for providing the particles of air to cause reflection and dispersion effects, as shown in Fig. 4. Furthermore, referring to Fig. 2, the adjacent reaction units 2 of the present invention are symmetrically configured for increasing frequency of interference, superposition, reflection and dispersion. In accordance with matter ready to be processed by the reaction units 2, the reaction units 2 may differently arranged in adjacence, opposition or offset.

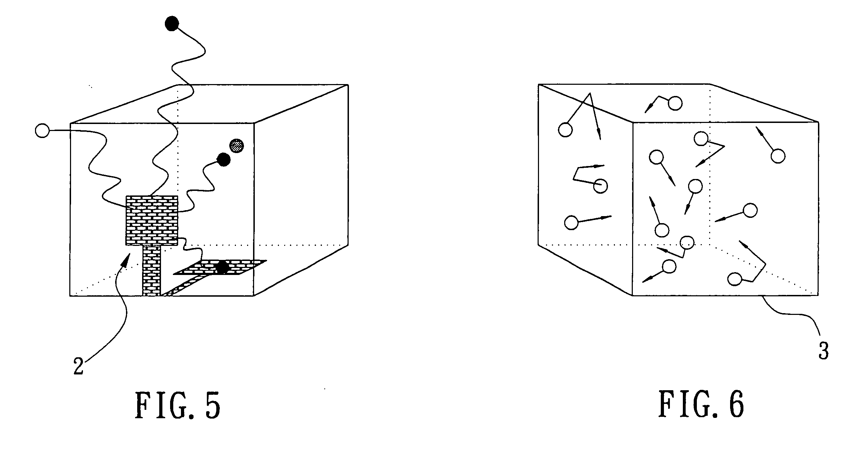

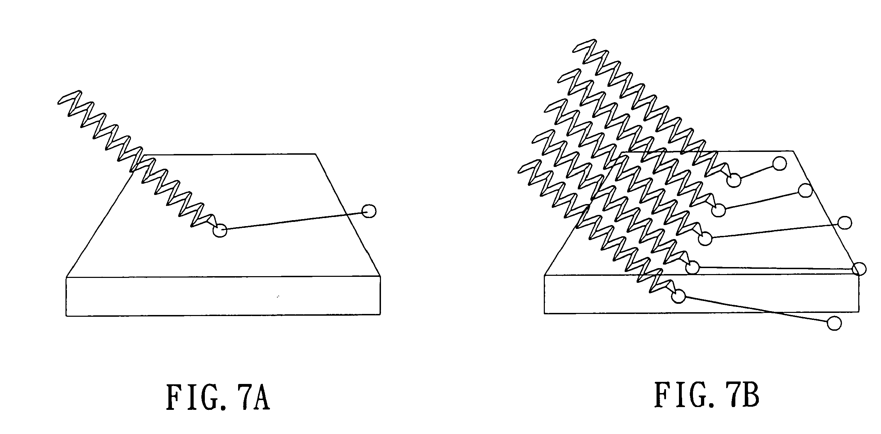

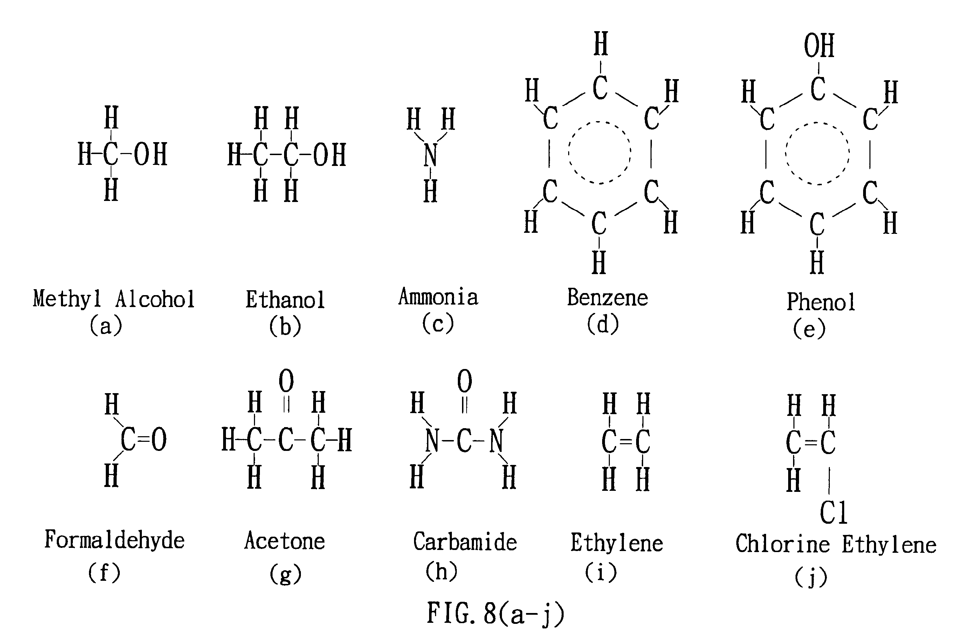

Further referring to Figs. 5-6, the reaction units 2 of the present invention are assembled in a fixed space 3 of a transparent acrylic box and air particles backwards and forwards impact in the fixed space to cause circumambulating. It is emphasized that the reaction units 2 of the present invention may cooperate with time control units to obtain frequency energy of invisible light including many kinds of rays to impact out electrons. As shown in Figs. 3-4, since the velocity of light is so fast (3 X 108 meter/second in vacuum), after interference, superposition, reflection and dispersion, particles of the invisible light generate million impact frequency and emit far and near through the reaction units 2 of the present invention. Referring to Fig. 5, when invisible light directly enters nature through the fixed space, frequency intensity of the particles of the invisible light cannot break electrons away. Even though the electrons are broken away, they are hold by the circumambient matter and so cannot be collected. Referring to Fig. 6, impact of air particles of the fixed space generates continuous impact reaction of the air particles of the fixed space. Therefore, the come-and-go impact particles obtain the frequency energy of invisible light to impact out electrons through the reaction units 2, which is configured with a geometric shape for cooperating with preset time control of the time control unit. When the electrons obtain a certain frequency range of particle energy impact, the electrons will deviate (as shown in Figs. 7A and 7B, that's photoemission). Though molecule structures of each matter are different, each element of the matter has a specific restraining force to electrons thereof. As shown in Fig. 8(a-j), it shows that linking arrangement of elements of compound is a unique characteristic of matter. Thus, through processing control of continuous different reaction time of different reaction units 2, electrons deviated in succession are more and more, bond junctions are decomposed gradually, and large molecules are decomposed into elements and small molecules. The deviated electrons are affected by the earth magnetic field thereby re-linking and arranging the small molecules and elements to a balance state. In accordance with matter characteristics and conservation of mass, large molecules, which are harmful and hard to decompose, can be decomposed through photoelectric magnetization for increasing matter energy characteristics to a high point thereby becoming useful molecules.

The steady device of matter energy of the present invention is applied to process drinking water and cosmetic, which results in increasing matter energy after checking and measuring.

Drinking water

1. It is approved that the processed drinking water has characteristics of high frequency and high resistance and is benefited to be absorbed by human cells and stomach through checking the original water, the processed water and other water by an LCR (inductance frequency, capacitance, resistance) measuring instrument.

2. It is proved by international test organization SGS that proportion and content of microelement of water (germanium, cuprum, zinc, manganese, selenium, nickel, silicon, calcium, magnesium, kalium and so on) can be willfully and balancedly adjusted for helping to adjust human corporeity, activate cells and increase immunity through continuous different processing of the reaction units 2 of the present invention.

3. The water processed by the present invention can increase dissolving rate of many kinds of matter (increasing over 60 % ) for helping human organs to absorb and metabolize. Furthermore, it is discovered through estimation of animalcule suppressive ability that the processed water increases 33 % of bacteriostatic ability to coliform, salmonella and staphylococcus.

4. After a period of drinking the processed water, important elements which human bones lack, such as calcium, boron, silicon, phosphorus, magnesium, fluorin and so on, can be balancedly and complementarily adjusted thereby facilitating to consolidate bone density, accelerate composing of bone-growing cells, prevent bone from running off, improve osteoporosis, have healthy skeleton and grow tall for a child or youngster, which is demonstrated by a bone density measuring instrument.

5. The water which is continuously and differently processed by the reaction units 2 of the present invention has different microelement, dissolving rate, bacteriostatic ability and cell activation characteristics, which can recuperate and ameliorate weak corporeity thereby recovering to a young and strong corporeity state.

6. It is tested through nuclear magnetic resonance ( MNI 500) that the water processed by the present invention (code number: SKM8, SKMK, SK77, T7) has molecular weight linewidth (55.999, 55.361, 55.829, 55.865) which is less than that of a common package water (56.252) known as minimum molecule group in the world.

Cosmetic

1. The cosmetic processed by the present invention can keep deep-seated moist to the outside and the inside of skin, and have nutriment effectively absorbed by cells.

2. The processed cosmetic can reduce melanin and increase skin-whitening effect of floridity.

3. The processed cosmetic has a good function of adjusting sebum secretion whereby a user can feel cleanlily comfortable when or after using the processed cosmetic.

4. The processed cosmetic can maintain skin at a normal PH value and ameliorate skin texture.

5. It is proved that the processed cosmetic has no skin irritating or bad reaction.

6. It is proved through a cell toxicity test that cell livability is more than the standard of 90%, whereby the processed cosmetic has no disoperation to cells.

7. The processed cosmetic has no hydrargyrum.

A common beauty product can only add different proportion or content of materials in cosmetic for making beauty directions. Due to compatibility and antagonism between different materials, functions of the beauty product cannot be sufficiently brought into play. The characteristic of the present invention is to use the reaction units to converge and reflect waves of natural invisible light for adjusting functions of a beauty product to sufficiently bring unobvious or potential good characteristics of the beauty product into play thereby highly increasing effect of the beauty product. In other words, the cosmetic processed by the present invention can increase functions thereof and accelerate occurrence of effect, even after activation the processed cosmetic can have functions which are unobvious to the cosmetic before processing, for example effective whitening and melanin reduction.

Moreover, the steady device of matter energy of the present invention also can be applied to beauty instruments, wine, tea, planting, animal breeding, T cell cultivation of stem cell, medical treatment and so on for keeping matter energy of the processed matter at a high point and accelerating occurrence of a good effect.

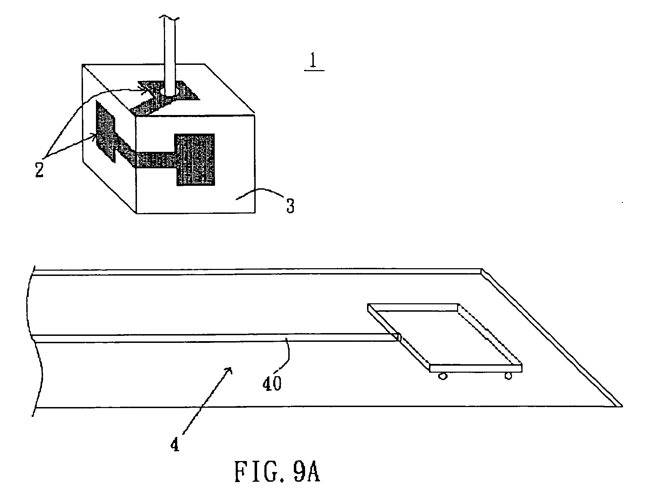

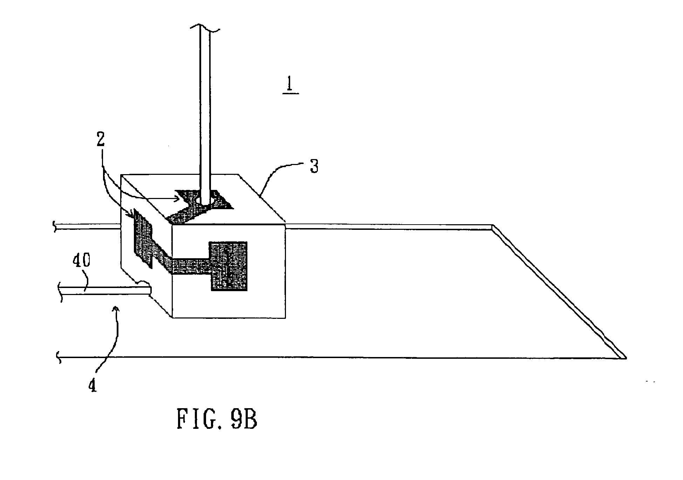

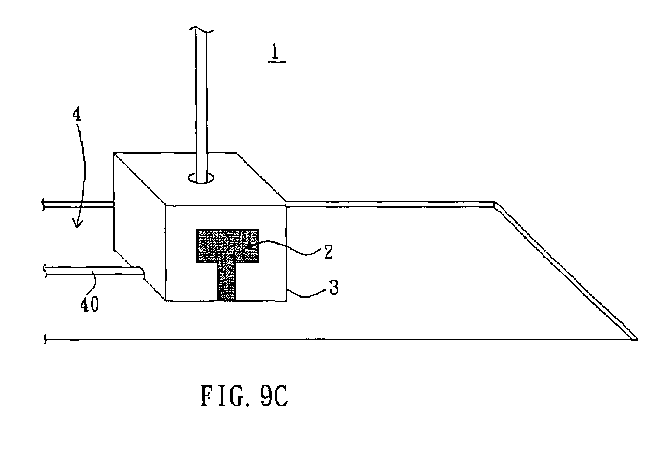

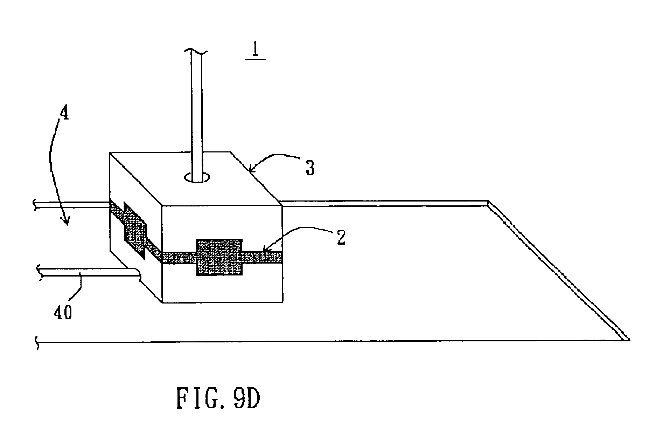

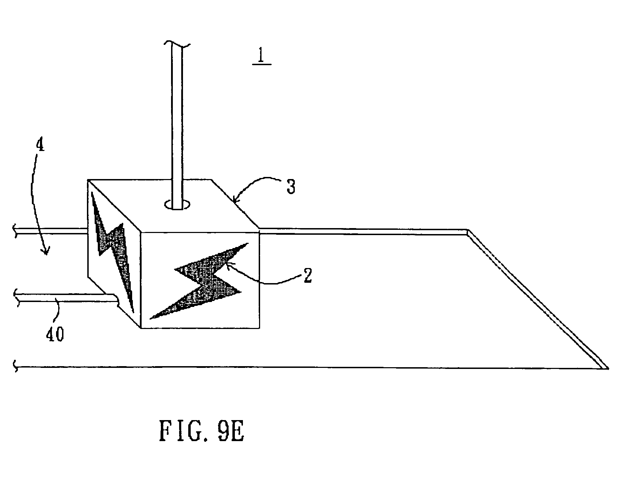

Referring to Figs. 9A-9E, they further shows that the cosmetic is continuously processed through different geometric shapes of reaction units 2, fixed spaces 3 and different processing time cooperating with an automatic transmission unit 4 (at least including a pneumatic extension rod 40 and a man-machine interface controller (not labeled)). The shape and configuration of the reaction units 2 within the different fixed spaces 3 are different. The cosmetic has different matter energy effect at each processing stage. The continuous processing object, time and effect are described as follows.

Processing matter: "Yuzininglu" cosmetic.

Process and type: process means processing sequence, and type means code of each process.

Reaction time means time of processed matter being closed within the fixed space.

Recomposing time means time of the fixed space lasting open.

Producing effect means effect, which the processed matter has after each reaction time.

| process | type | reaction time (close processing) | recomposing time (open waiting) | producing effect |
|---|---|---|---|---|
| 1 | 3# | 39 secs. | 18 secs. | Producing high resonance frequency and consistency of spin field |
| 2 | 2 # | 9 secs. | 18 secs. | Reducing molecule groups, increasing dissolving rate and facilitating to absorb |
| 3 | 4# | 9 secs. | 18 secs. | Decomposing large molecules and nutriment to dissolve in water |
| 4 | 10# | 9 secs. | 18 secs. | Rearranging molecule structure and activating weak good characteristics of matter |
| 5 | 10# | 12 secs. | | Balancing conformity stability |

Similarly, wine energy is obviously increased after the wine is continuously processed through different processing time.

1. Processing matter: CHIVAS-12 annual Whiskey

2. Processing control: kind A and kind B

| kind A | | | | kind B | | | |
|---|---|---|---|---|---|---|---|
| process | type time | Reaction | Recomposing time | process | type | Reaction time | Recomposing time |
| 1 | 5# | 39 | 18 | 1 | 5# | 19 | 11 |
| 2 | 3# | 9 | 18 | 2 | 3# | 5 | 11 |
| 3 | 4# | 9 | 18 | 3 | 4# | 9 | 11 |
| 4 | 10# | 9 | | 4 | 10# | 5 | |
| Smell: steady and strong, not urgent and slow smell of wine having complicated ripe wheat fragrant and sweet fragrant. | | | | Smell: fragrant and lively, the wine jumping powerfully without irritating the nose, inserting fresh wheat fragrant smell in fragrant smell. | | | |
| Taste: round to enter the mouth, gentle and agreeable, simple and honest, afterwards wine sense rising slowly, balance but comfort, the wine distributing complicated fragrant, sweet and milk fragrant after passing the throat, special in the fragrant, sweet and pure. | | | | taste: following and breaking into more powerful wine sense after the gentle and agreeable mouthfeel, stopping in the throat but not feeling that it is hot to sting, still feeling the fragrance of the wheat field after passing the throat, a glass of quite distinctive wine. | | | |

3. Note:

(1) Kinds A and B are processed with four same processes without adding any matter but with different processing time and pitch time for producing different smell and taste of wine. CHIVAS-12 annual existing hot sense of thorn is close to dispelling. The simple, honest, sweet and pure of a high grade wine quality is refined and finished in a short time.

(2) Kind A is processed for 39 seconds through 5 # figure space. Energy of air produces torsion field to make existing molecule spin field of alcohol, fat and phenol of whiskey changed. Through recombinating and arranging molecules for 18 seconds, whiskey is promoted to have roast, steady smell of wine, and wine strength becomes relatively gentle and agreeable.

(3) After being processed for 9 seconds through 3 # figure space, the sugariness of the whiskey improves slightly and fragrance seems strong.

(4) After being processed through 4# figure space for 9 seconds, the whiskey appears simple and honest mouthfeel.

(5) After being processed through 10 # figure space for 9 seconds, whiskey has ripe fragrance and complicated, sweet and pure mouthfeel change.

4. Achievement:

Traditional 12 annual CHIVAS must be stored and brewed for at least six more years, and then mediated with more crusted whiskey, so that fragrant smell of mouthfeel can become more fragrant, old, sweet, and pure, and so grade can be increased. But through the alcoholization processing of the present invention, it does not need to take several years to store and brew and it can produce lots of different kinds of fragrant smell of mouthfeel. This technology not only can promote CHIVAS, but also can make sure to promote and change other wines, such as grape wine, Cognac's brandy, whiskey, husked kaoliang wine and so on. The whiskey had already been shown and obtained unanimous affirmation before international known wine factories, such as France, Britain, Japan, China and so on since 2002 at the same time.

It is understood that the invention may be embodied in other forms without departing from the spirit thereof. Thus, the present examples and embodiments are to be considered in all respects as illustrative and not restrictive, and the invention is not to be limited to the details given herein.

## Claims

1. A steady state energy of matter device comprising:
a chamber;
at least one reaction unit assembled in the chamber, the or each reaction unit comprising at least two mesh plates and metal plates spaced apart from the mesh plates for providing particles of non-visible radiation capable of interference, superposition, reflection and dispersion; and
a time control unit for controlling the reaction time of the or each reaction unit,
whereby the matter to be processed is put into the chamber and is processed for a predetermined reaction time causing air particles moving to and fro to impact in the chamber to generate circumambulation thereby obtaining energy of the frequency of non-visible radiation to impact out electrons, decompose large molecules into elements and small molecules whereafter the elements and small molecules are relinked and rearranged to a steady state thereby increasing the characteristics of the energy of matter to a high level.

2. A steady state energy of matter device as claimed in claim 1 wherein the chamber is defined in a transparent acrylic box.

3. A steady state energy of matter device as claimed in claim 1 or 2 wherein each mesh plate is black.

4. A steady state energy of matter device as claimed in any preceding claim wherein the metal plate is argent or silver and has a rough surface.

5. A steady state energy of matter device as claimed in any preceding claim wherein the reaction unit is columnar or is any regular or irregular geometric shape.

6. A steady state energy of matter device as claimed in any preceding claim wherein a plurality of meshes is defined in the mesh plate and the meshes are isometrically arranged in a plurality of rows offset from each other.

7. A steady state energy of matter device as claimed in any preceding claim comprising three reaction units which are adjacent or opposite to each other or offset from each other.

8. A steady state energy of matter device as claimed in claim 7 wherein the mesh plates and the metal plates are configured in different quantity scales.

9. A steady state energy of matter device as claimed in any preceding claim further comprising:
a plurality of chambers receiving reaction units of different geometric shapes and cooperating with an automatic transmission unit which comprises at least a pneumatic extension rod and a manual interface controller.

10. A steady state energy of matter device comprising:
at least one reaction unit assembled with the matter to be processed, the or each reaction unit comprising: at least two mesh plates and metal plates spaced apart from the mesh plates for providing particles of non-visible radiation capable of interference, superposition, reflection and dispersion whereby air particles of the matter to be processed generate circumambulation from the mesh plates to the metal plates by moving to and fro to cause impacts thereby obtaining energy of the frequency of non-visible radiation to impact out electrons, decompose large molecules into elements and small molecules whereafter the elements and small molecules and relinked and rearranged to a steady state thereby increasing the characteristics of the energy of matter to a high level.

11. The steady state energy of matter device claimed in claim 10 wherein each mesh plate is black.

12. A steady state energy of matter device as claimed in any of claims 10 to 11 wherein the metal plate is argent or silver and has a rough surface.

13. A steady state energy of matter device as claimed in any of claims 10 to 12 wherein the reaction unit is columnar or is any regular or irregular geometric shape.

14. A steady state energy of matter device as claimed in any of claims 10 to 13 wherein a plurality of meshes is defined in the mesh plate and the meshes are isometrically arranged in a plurality of rows offset from each other.

15. A steady state energy of matter device as claimed in any of claims 10 to 14 comprising three reaction units which are adjacent or opposite to each other or offset from each other.

16. A steady state energy of matter device as claimed in claim 15 wherein the mesh plates and the metal plates are configured in different quantity scales.

17. A steady state energy of matter device as claimed in any of claims 10 to 16 wherein the reaction unit is assembled with the matter to be processed by adhesive tape or directly inserted onto a position on the mesh plate and the metal plate.
